# EUROPÄISCHE PATENTSCHRIFT

(11) **EP 2 633 574 B1**
(45) Veröffentlichungstag und Bekanntmachung des Hinweises auf die Patenterteilung: **31.12.2014**
(21) Anmeldenummer: 11757225.5
(22) Anmeldetag: 01.09.2011
(51) Int. Cl.: H01M 4/04, H01M 4/38, H01M 10/42, H01M 4/134, H01M 4/1395, H01M 10/058, H01M 4/36, H01M 10/0565, H01M 10/0569, H01M 10/0568, H01M 10/052, H01M 4/40

(54) **EX-SITU-HERSTELLUNG EINER LITHIUMANODENSCHUTZSCHICHT**
EX SITU PRODUCTION OF A LITHIUM ANODE PROTECTIVE LAYER
DISPOSITIF DE PRODUCTION EX SITU D' UNE COUCHE DE PROTECTION D' UNE COUCHE DE PROTECTION D' ANODE DE LITHIUM

(30) Priorität: 29.10.2010 DE 102010043111
(43) Veröffentlichungstag der Anmeldung: 04.09.2013
(73) Patentinhaber: Robert Bosch GmbH, 70442 Stuttgart (DE)
(72) Erfinder: WEGNER, Marcus, 71229 Leonberg (DE); GRIMMINGER, Jens, 89250 Senden (DE); TENZER, Martin, 71701 Schwieberdingen (DE); LOHMANN, Timm, Palo Alto 943041223 (US)
(86) Internationale Anmeldenummer: PCT/EP2011/065088
(87) Internationale Veröffentlichungsnummer: WO 2012/055614

(56) Entgegenhaltungen:
- WO-A1-01/39303
- US-A1- 2005 008 938
- US-A1- 2005 042 515
- DING F ET AL: "1,3-dioxolane pretreatment to improve the interfacial characteristics of a lithium anode", RARE METALS - XIYOU JINSHU, PRESS OF METALLURGICAL INDUSTRY, BEIJING, CN, Bd. 25, Nr. 4, 1. August 2006 (2006-08-01) , Seiten 297-302, XP022935253, ISSN: 1001-0521, DOI: 10.1016/S1001-0521(06)60057-0 [gefunden am 2006-08-01]
- ISHIKAWA M ET AL: "Pretreatment of Li metal anode with electrolyte additive for enhancing Li cycleability", JOURNAL OF POWER SOURCES, ELSEVIER SA, CH, Bd. 146, Nr. 1-2, 26. August 2005 (2005-08-26), Seiten 199-203, XP025269010, ISSN: 0378-7753, DOI: 10.1016/J.JPOWSOUR.2005.03.007 [gefunden am 2005-08-26]

## Beschreibung

Die vorliegende Erfindung betrifft ein Verfahren zur Herstellung einer Anode für eine Lithiumzelle und/oder einer Lithiumzelle sowie derartige Anoden und Lithiumzellen.

### Stand der Technik

Bei herkömmlichen Lithium-Zellen und Lithium-Ionen-Zellen bildet sich bereits unmittelbar nach dem Zusammenfügen (Assemblieren) der Zelle auf der Anode eine Schicht aus Elektrolytzersetzungsprodukten. Diese Schicht, welche sowohl anorganische als auch organische Bestandteile enthalten kann und auch als Solid-Electrolyte-Interface (SEI) bezeichnet wird, ist für den Betrieb einer Lithium-(Ionen-)Batterie unerlässlich, da der Elektrolyt im Allgemeinen elektrochemisch instabil gegenüber der Anode ist. Bedingt durch Alterung, ebenso wie durch wiederholtes Laden und Entladen der Zelle, wird die Schicht jedoch wiederholt zerstört und an den schadhaften Stellen erneut nachgebildet, wobei kontinuierlich das Aktivmaterial der Anode sowie der Elektrolyt verbraucht wird. In besonderem Maße ist durch diesen Effekt die Funktionsweise von Anoden, welche metallisches Lithium umfassen, beeinträchtigt.

Neben dem Verbrauch von Anodenmaterial und Elektrolyt führt die fortlaufende Zerstörung der Schicht auch dazu, dass sich an den schadhaften Stellen vermehrt Dendriten bilden können, welche die Sicherheit der gesamten Zelle nachteilig beeinträchtigen können. Auf lange Sicht verschlechtert sich hierdurch die gesamte Oberflächenmorphologie der Anode, so dass die Anodenkapazität bis hin zum Versagen der Zelle sinken kann.

Die Druckschrift US 2005/0008938 A1 beschreibt eine negative Elektrode für eine wiederaufladbare Lithiumbatterie.

Auch die Druckschrift US 2005/0042515 offenbart eine solche Elektrode.

### Offenbarung der Erfindung

Gegenstand der vorliegenden Erfindung ist ein Verfahren zur Herstellung einer Anode für eine Lithiumzelle und/oder einer Lithiumzelle, umfassend die in Anspruch 1 genannten Merkmale.

Erfindungsgemäß erfolgt Verfahrensschritt a) *ex situ* (außerhalb der herzustellenden Lithiumzelle) beziehungsweise vor dem Zusammenfügen, insbesondere der Anode und der Kathode, der herzustellenden Lithiumzelle. Insbesondere kann Verfahrensschritt a) vor dem Zusammenfügen der Anode, der Kathode und des eigentlichen Elektrolyten, später zweiter Elektrolyt genannt, der herzustellenden Lithiumzelle erfolgen.

Unter einer Lithiumzelle kann im Sinn der vorliegenden Erfindung insbesondere eine galvanische Zelle verstanden werden, deren Anode metallisches Lithium gegebenenfalls in Form einer Legierung umfasst.

Das erfindungsgemäße Verfahren ermöglicht die gezielte Herstellung einer Elektrolytzersetzungsprodukte umfassenden Schutzschicht (Solid-Electrolyte-Interface (SEI)) auf einer Lithium umfassenden Anode. Erreicht wird dies dadurch, dass der Prozess der Schutzschichtbildung, der üblicherweise in der Zelle bei den ersten Lade- und Entladevorgängen abläuft, gezielt noch vor dem Zusammenbau der Zelle auf der Anode bewirkt wird. Dies hat den Vorteil, dass die erste, Elektrolytzersetzungsprodukte umfassende Schutzschicht in einem weiteren Verfahrensschritt wirksam stabilisiert und verstärkt werden kann, um ein dauerhaftes und robustes Schutzschichtsystem auf der Anode zu etablieren, welches sich insbesondere vorteilhaft auf die Kapazität, die Lebensdauer und die Sicherheit der Zelle auswirken kann.

Im Rahmen einer Ausführungsform umfasst das Verfahren weiterhin den Verfahrensschritt:
a1) Erwärmen der Anordnung aus Verfahrenschritt a), insbesondere auf eine Temperatur ≥ 30 °C, beispielsweises 50 °C, zum Beispiel auf 60 °C. So kann vorteilhafterweise das Ausbilden der ersten Schutzschicht unterstützt werden.

Erfindungsgemäß umfasst das Verfahren weiterhin den Verfahrensschritt:
b) Aufbringen eines polymerisierbaren und/oder polymeren Materials auf die erste Schutzschicht zum Ausbilden einer zweiten Schutzschicht auf der ersten Schutzschicht.

Durch die zweite Schutzschicht kann die erste Schutzschicht weiter stabilisiert und eine dichte, stabile und dauerhafte Trennung zwischen der Anode und dem später in der Lithiumzelle verwendeten Elektrolyten gewährleistet werden. So kann vorteilhafterweise die Lebensdauer und Sicherheit der Anode und damit auch der gesamten Zelle deutlich erhöht werden. Selbst bei größeren Schäden an der gesamten Zelle kann eine derartig geschützte Anode vor äußeren Einflüssen besser als eine Anode mit einer konventionellen SEI-Schutzschicht geschützt sein.

Auch Verfahrensschritt b) kann insbesondere vor dem Zusammenfügen der Anode und der Kathode, insbesondere der Anode, der Kathode und des eigentlichen Elektrolyten, später zweiter Elektrolyt genannt, der herzustellenden Lithiumzelle erfolgen.

Im Rahmen einer weiteren Ausführungsform umfasst das Verfahren weiterhin den Verfahrensschritt:
b1) Bestrahlen oder Erwärmen der Anordnung aus Verfahrenschritt b), beispielsweise mit ultravioletter oder infraroter Strahlung, insbesondere zur Polymerisation des polymerisierbaren Materials.

So kann vorteilhafterweise das Ausbilden der zweiten Schutzschicht unterstützt werden.

Im Rahmen einer weiteren Ausführungsform umfasst das Verfahren weiterhin den Verfahrensschritt:
c) Zusammenfügen der Anodenanordnung aus Verfahrensschritt a), a1), b) oder b1), mit einer Kathode, einem zweiten Elektrolyten und gegebenenfalls einem oder mehreren, weiteren Zellbauteilen zu einer Lithiumzelle.

Weitere Zellbauteile können dabei beispielsweise ein Separator, Stromkollektoren, Stromleitungselementen, Isolationselementen, Verbindungselementen, Verpackungselemente und/oder Gehäuseelementen sein.

Der erste Elektrolyt und/oder der zweite Elektrolyt kann ein flüssiger oder fester Elektrolyt, insbesondere ein flüssiger Elektrolyt, sein.

Im Rahmen einer weiteren Ausführungsform umfasst der erste und/oder zweite Elektrolyt mindestens ein Lösungsmittel, welches ausgewählt ist aus der Gruppe bestehend aus Kohlensäureestern, Lactonen, Ethern, insbesondere cyclischen oder acyclischen Ethern, und Kombinationen davon.

Dabei können die Kohlensäureester beispielsweise Ethylencarbonat (EC), Propylencarbonat (PC), Dimethylcarbonat (DMC), Diethylcarbonat (DEC) und/oder Vinylencarbonat (VC), insbesondere Ethylencarbonat (EC), Propylencarbonat (PC), Dimethylcarbonat (DMC) und/oder Diethylcarbonat (DEC), sein.

Die Lactone können dabei beispielsweise γ-Butyrolacton (GBL) oder γ-Butyrolactonderivate sein.

Die Ether können dabei insbesondere cyclische oder acyclische Mono-, Di- oder Tri-Ether, zum Beispiel Mono-, Di- oder Tri-Alkylenether, wie Mono-/Di-/Tri-1,n-Alkylendialkylethern, sein, insbesondere wobei Alkylen Methylen, Ethylen(glykol), Propylen oder Butylen beziehungsweise Alkyl Methyl, Ethyl, Propyl oder Butyl ist. Beispielsweise können die Ether dabei 1,3-Dioxolan (DOL), Ethylenglycoldimethylether (Glyme, Monoethylenglycoldimethylether, DME), Ethylenglycoldiethylether (EGDEE), Diethylenglykoldimethylether (Diglyme) und/oder Triethylenglykoldiemethylether (Triglyme, TEGDME) sein.

Im Rahmen einer weiteren Ausführungsform umfasst der erste und/oder zweite Elektrolyt mindestens ein Leitsalz, welches ausgewählt ist aus der Gruppe bestehend aus Lithiumbis(trifluormethylsulphonyl)imid (LiTFSI), Lithiumhexafluorophosphat (LiPF₆), Lithiumtetrafluoroborat (LiBF₄), Lithiumtrifluormethansulfonat (LiCF₃SO₃), Lithiumchlorat (LiClO₄), Lithiumbis(oxalato)borat (LiBOB), Lithiumfluorid (LiF), Lithiumnitrat (LiNO₃), Lithiumhexafluoroarsenat (LiAsF₆) und Kombinationen davon.

Vorzugsweise weist der zweite Elektrolyt andere Komponenten und/oder eine andere Zusammensetzung, insbesondere andere Lösungsmittel und/oder Leitsalze, als der erste Elektrolyt auf.

Im Rahmen einer weiteren Ausführungsform weist der erste Elektrolyt ein oder mehrere Lösungsmittel und/oder Leitsalze auf, welche besser zum Ausbilden einer Schutzschicht aus Elektrolytzersetzungsprodukten auf dem Anodenmaterial geeignet sind als das oder die Lösungsmittel und/oder Leitsalze des zweiten Elektrolyten. So kann vorteilhafterweise einerseits eine stabile erste Schutzschicht ausgebildet werden und andererseits Wechselwirkungen der Anode mit dem (zweiten) Elektrolyten während des Betriebs der Zelle vermieden werden.

Im Rahmen einer weiteren Ausführungsform weist der erste Elektrolyt einen Kohlensäureester oder eine Kohlensäureestermischung, beispielsweise einen cyclischen Kohlensäureester oder eine Mischung cyclischer Kohlensäureester, als Lösungsmittel auf. Zum Beispiel kann der erste Elektrolyt einen Kohlensäureester oder eine Kohlensäureestermischung, ausgewählt aus der Gruppe bestehend aus Ethylencarbonat (EC), Propylencarbonat (PC), Dimethylcarbonat (DMC), Diethylcarbonat (DEC), Vinylencarbonat (VC), insbesondere Ethylencarbonat (EC), Propylencarbonat (PC), Dimethylcarbonat (DMC), Diethylcarbonat (DEC), und Kombinationen davon, als Lösungsmittel aufweisen. Derartige Lösungsmittel haben sich als besonders vorteilhaft zum Ausbilden einer SEI-Schutzschicht erwiesen.

Im Rahmen einer weiteren Ausführungsform weist der zweite Elektrolyt einen Ether oder eine Ethermischung, beispielsweise einen cyclischen oder acyclischen Ether oder eine Mischung von cyclischen und/oder acyclischen Ethern, wie einen cyclischen oder acyclischen Mono-, Di- oder Triether oder eine Mischung von cyclischen und/oder acyclischen Mono-, Di- und/oder Triethern, zum Beispiel einen oder mehrere Mono-, Di- oder Tri-Alkylenether, wie Mono-/Di-/Tri-1,n-Alkylendialkylether, insbesondere wobei Alkylen Methylen, Ethylen(glykol), Propylen oder Butylen beziehungsweise Alkyl Methyl, Ethyl, Propyl oder Butyl ist, als Lösungsmittel auf. Zum Beispiel kann der zweite Elektrolyt einen Ether oder eine Ethermischung, ausgewählt aus der Gruppe bestehend aus 1,3-Dioxolan (DOL), Ethylenglycoldimethylether (Glyme, Monoethylenglycoldimethylether, DME), Ethylenglycoldiethylether (EGDEE), Diethylenglykoldimethylether (Diglyme) und/oder Triethylenglykoldiemethylether (Triglyme, TEGDME) und Kombinationen davon, als Lösungsmittel aufweisen. Derartige Lösungsmittel haben sich als besonders vorteilhaft als Elektrolytlösungsmittel während des Betriebes der Zelle erwiesen.

Im Rahmen einer weiteren Ausführungsform umfasst der erste Elektrolyt und/oder das polymerisierbare und/oder polymere Material mindestens ein Additiv, welches ausgewählt ist aus der Gruppe bestehend aus polymerisierbaren und/oder polymerisierten Verbindungen, insbesondere mit polymerisierbaren und/oder polymerisierten Doppelbindungen, beispielsweise Acrylsäurederivaten und/oder auf der Basis von Acrylsäurederivaten, wie Butylacrylat, Methylmethacrylat, Acrylnitril, Verbindungen mit delokalisierten Elektrodensystemen, wie Vinylencarbonat (VC) und/oder Catecholcarbonat, Polymeren, insbesondere halogenierten beziehungsweise perfluorierten Polymeren, wie Polyvinylidenfluorid (PVDF), Lithiumionen leitenden Verbindungen beziehungsweise Festkörperpartikeln, wie Aluminiumtrüodid (AlI₃), Aluminiumtrifluorid (AlF₃) und/oder Lanthanzirkonaten, und Kombinationen davon.

Durch polymerisierbare und/oder polymerisierte Verbindungen, Verbindungen mit polymerisierbaren und/oder polymerisierten Doppelbindungen und/oder mit delokalisierten Elektrodensystemen und Polymere kann vorteilhafterweise die erste und/oder zweite Schutzschicht verstärkt werden.

Durch Lithiumionen leitende Verbindungen beziehungsweise Festkörperpartikel kann vorteilhafterweise die Lithiumionenleitfähigkeit der ersten und/oder zweiten Schutzschicht verbessert werden.

Im Rahmen einer weiteren Ausführungsform umfasst das polymerisierbare und/oder polymere Material ein oder mehrere Monomere, welche ausgewählt sind aus der Gruppe bestehend aus Ethylenoxid, Ethylen, Propylen, Styrol, Vinylcarbonat, Acrylaten und Mischungen davon.

In Verfahrensschritt a) beziehungsweise a1) kann beispielsweise eine erste Schutzschicht mit einer Schichtdicke in einem Bereich von ≥ 0,01 µm bis ≤ 50 µm ausgebildet werden. In Verfahrenschritt b) beziehungsweise b1) kann beispielsweise eine zweite Schutzschicht mit einer Schichtdicke in einem Bereich von ≥ 0,01 µm bis ≤ 100 µm ausgebildet werden.

Vorzugsweise wird das Verfahren unter Edelgasatmosphäre, insbesondere Argonatmosphäre, durchgeführt.

Hinsichtlich weiterer Merkmale und Vorteile des erfindungsgemäßen Verfahrens wird hiermit explizit auf die Erläuterungen im Zusammenhang mit den erfindungsgemäßen Anoden und Lithiumzellen sowie die Figurenbeschreibung verwiesen.

Ein weiterer Gegenstand der vorliegenden Erfindung ist eine Anode für eine Lithiumzelle, welche durch ein erfindungsgemäßes Verfahren hergestellt ist.

Hinsichtlich weiterer Merkmale und Vorteile der erfindungsgemäß hergestellten Anode wird hiermit explizit auf die Erläuterungen im Zusammenhang mit dem erfindungsgemäßen Verfahren, der erfindungsgemäßen Anode und den erfindungsgemäßen Lithiumzellen sowie die Figurenbeschreibung verwiesen.

Ein weiterer Gegenstand der vorliegenden Erfindung ist eine Lithiumzelle, welche durch ein erfindungsgemäßes Verfahren hergestellt ist.

Hinsichtlich weiterer Merkmale und Vorteile der erfindungsgemäß hergestellten Lithiumzelle wird hiermit explizit auf die Erläuterungen im Zusammenhang mit dem erfindungsgemäßen Verfahren, der erfindungsgemäßen Anoden und der erfindungsgemäßen Lithiumzelle sowie die Figurenbeschreibung verwiesen.

Die erste Schutzschicht kann beispielsweise Elektrolytzersetzungsprodukte von einem Elektrolyten aus mindestens einem Lösungsmittel, welches ausgewählt ist aus der Gruppe bestehend aus Kohlensäureestern, Lactonen, Ethern, insbesondere cyclischen oder acyclischen Ethern, und Kombinationen davon, und mindestens einem Leitsalz, welches ausgewählt ist aus der Gruppe bestehend aus Lithiumbis(trifluormethylsulphonyl)imid (LiTFSI), Lithiumhexafluorophosphat (LiPF₆), Lithiumtetrafluoroborat (LiBF₄), Lithiumtrifluormethansulfonat (LiCF₃SO₃), Lithiumchlorat (LiClO₄), Lithiumbis(oxalato)borat (LiBOB), Lithiumfluorid (LiF), Lithiumnitrat (LiNO₃), Lithiumhexafluoroarsenat (LiAsF₆) und Kombinationen davon, umfassen. Insbesondere kann die erste Schutzschicht Elektrolytzersetzungsprodukte von einem Elektrolyten umfassen, welcher einen Kohlensäureester oder eine Kohlensäureestermischung, beispielsweise einen cyclischen Kohlensäureester oder eine Mischung cyclischer Kohlensäureester, als Lösungsmittel aufweist.

Die zweite Schutzschicht kann beispielsweise mindestens ein Polymer umfassen, welches ausgewählt ist aus der Gruppe bestehend aus Polyethylenoxid, Polyethylen, Polypropylen, Polystyrol, Polyacrylaten, perfluorierten Polymeren, insbesondere Polyethylenoxid, Polyethylen, Polypropylen, Polystyrol, Polyacrylaten, und Kombinationen davon.

Vorzugsweise umfasst die erste und/oder zweite Schutzschicht mindestens ein Additiv, welches ausgewählt ist aus der Gruppe bestehend aus Polymeren, insbesondere Polymeren mit polymerisierten Doppelbindungen, beispielsweise auf der Basis von Acrylsäurederivaten, wie Butylacrylat, Methylmethacrylat, Acrylnitril, und/oder halogenierten beziehungsweise perfluorierten Polymeren, wie Polyvinylidenfluorid (PVDF), Verbindungen mit delokalisierten Elektrodensystemen, wie Vinylencarbonat (VC) und/oder Catecholcarbonat, Lithiumionen leitenden Verbindungen beziehungsweise Festkörperpartikeln, wie Aluminiumtriiodid (AlI₃), Aluminiumtrifluorid (AlF₃) und/oder Lanthanzirkonaten, und Kombinationen davon.

Beispielsweise kann die erste Schutzschicht eine Schichtdicke in einem Bereich von ≥ 0,01 µm bis ≤ 50 µm und die zweite Schutzschicht eine Schichtdicke in einem Bereich von ≥ 0,01 µm bis ≤ 100 µm aufweisen.

Hinsichtlich weiterer Merkmale und Vorteile der erfindungsgemäßen Anode wird hiermit explizit auf die Erläuterungen im Zusammenhang mit dem erfindungsgemäßen Verfahren, der erfindungsgemäß hergestellten Anode und den erfindungsgemäßen Lithiumzellen sowie die Figurenbeschreibung verwiesen.

Ein weiterer Gegenstand der vorliegenden Erfindung ist eine Lithiumzelle, welche eine erfindungsgemäße Anode umfasst.

Die Lithiumzelle kann beispielsweise einen Elektrolyten aufweisen, welcher mindestens ein Lösungsmittel umfasst, welches ausgewählt ist aus der Gruppe bestehend aus Kohlensäureestern, Lactonen, Ethern, insbesondere cyclischen oder acyclischen Ethern, und Kombinationen davon.

Dabei können die Kohlensäureester beispielsweise Ethylencarbonat (EC), Propylencarbonat (PC), Dimethylcarbonat (DMC), Diethylcarbonat (DEC) und/oder Vinylencarbonat (VC), insbesondere Ethylencarbonat (EC), Propylencarbonat (PC), Dimethylcarbonat (DMC) und/oder Diethylcarbonat (DEC), sein.

Die Lactone können dabei beispielsweise γ-Butyrolacton (GBL) oder γ-Butyrolactonderivate sein.

Die Ether können dabei insbesondere cyclische oder acyclische Mono-, Di- oder Tri-Ether, zum Beispiel Mono-, Di- oder Tri-Alkylenether, wie Mono-/Di-/Tri-1,n-Alkylendialkylethern, sein, insbesondere wobei Alkylen Methylen, Ethylen(glykol), Propylen oder Butylen beziehungsweise Alkyl Methyl, Ethyl, Propyl oder Butyl ist. Beispielsweise können die Ether dabei 1,3-Dioxolan (DOL), Ethylenglycoldimethylether (Glyme, Monoethylenglycoldimethylether, DME), Ethylenglycoldiethylether (EGDEE), Diethylenglykoldimethylether (Diglyme) und/oder Triethylenglykoldiemethylether (Triglyme, TEGDME) sein.

Vorzugsweise weist die Lithiumzelle einen Elektrolyten auf, welcher einen Ether oder eine Ethermischung, beispielsweise einen cyclischen oder acyclischen Ether oder eine Mischung aus cyclischen oder acyclischen Ethern, zum Beispiel einen oder mehrere cyclische oder acyclische Mono-, Di- oder Triether, insbesondere einen oder mehrere Mono-, Di- oder Tri-Alkylenether, wie Mono-/Di-/Tri-1,n-Alkylendialkylether, als Lösungsmittel aufweist. Dabei kann Alkylen insbesondere für Methylen, Ethylen(glykol), Propylen oder Butylen beziehungsweise Alkyl für Methyl, Ethyl, Propyl oder Butyl stehen. Zum Beispiel kann die Lithiumzelle einen Elektrolyten aufweisen, welcher einen Ether oder eine Ethermischung, ausgewählt aus der Gruppe bestehend aus 1,3-Dioxolan (DOL), Ethylenglycoldimethylether (Glyme, Monoethylenglycoldimethylether, DME), Ethylenglycoldiethylether (EGDEE), Diethylenglykoldimethylether (Diglyme) und/oder Triethylenglykoldiemethylether (Triglyme, TEGDME) und Kombinationen davon, als Lösungsmittel aufweist.

Zum Beispiel kann die Lithiumzelle einen Elektrolyten aufweisen, welcher mindestens ein Leitsalz umfasst, welches ausgewählt ist aus der Gruppe bestehend aus Lithiumbis(trifluormethylsulphonyl)imid (LiTFSI), Lithiumhexafluorophosphat (LiPF6), Lithiumtetrafluoroborat (LiBF4), Lithiumtrifluormethansulfonat (LiCF3SO3), Lithiumchlorat (LiClO4), Lithiumbis(oxalato)borat (LiBOB), Lithiumfluorid (LiF), Lithiumnitrat (LiN03), Lithiumhexafluoroarsenat (LiAsF6) und Kombinationen davon.

Hinsichtlich weiterer Merkmale und Vorteile der erfindungsgemäßen Lithiumzelle wird hiermit explizit auf die Erläuterungen im Zusammenhang mit dem erfindungsgemäßen Verfahren, den erfindungsgemäßen Anoden und der erfindungsgemäß hergestellten Lithiumzelle sowie die Figurenbeschreibung verwiesen.

Ein weiterer Gegenstand der vorliegenden Erfindung ist ein elektrisches Gerät, welches eine erfindungsgemäße Lithiumzelle umfasst. Beispielsweise kann es sich bei dem elektrischen Gerät um ein Gerät handeln, welches ausgewählt ist aus der Gruppe bestehend aus Elektrowerkzeugen, Elektrogartengeräten, Computern, wie Einzelplatzrechnern, Notebooks, Multimediageräten, Telekommunikationsgeräten, wie Mobiltelefonen und PDAs, Hybridfahrzeugen, Plug-in-Hybrid-Fahrzeugen, Elektrofahrzeugen und Kombinationen davon. Hinsichtlich weiterer Merkmale und Vorteile wird hiermit explizit auf die vorstehenden Erläuterungen und die nachfolgende Figurenbeschreibung verwiesen.

### Zeichnungen und Beispiele

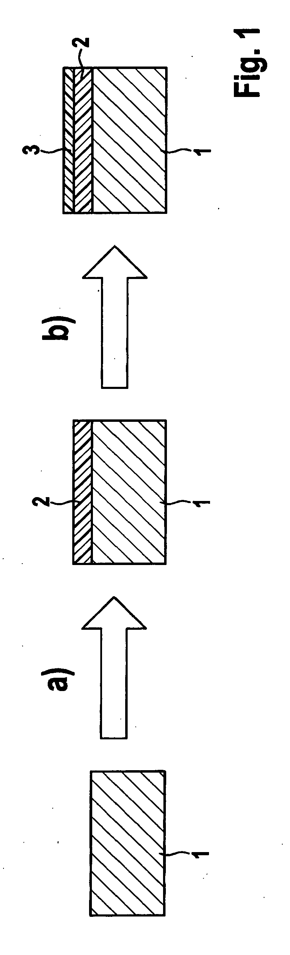

Weitere Vorteile und vorteilhafte Ausgestaltungen der erfindungsgemäßen Gegenstände werden durch die Zeichnung veranschaulicht und in der nachfolgenden Beschreibung erläutert. Dabei ist zu beachten, dass die Zeichnung nur beschreibenden Charakter hat und nicht dazu gedacht ist, die Erfindung in irgendeiner Form einzuschränken. Es zeigt
- Fig. 1: eine schematische Darstellung einer Ausführungsform des erfindungsgemäßen Verfahrens und der erfindungsgemäßen Anoden.

Figur 1 veranschaulicht, dass in Verfahrensschritt a) des erfindungsgemäßen Verfahrens ein erster Elektrolyt *ex situ,* also vor dem Zusammenfügen der herzustellenden Lithiumzelle, auf eine Anode 1 aufgebracht wird, welche metallisches Lithium, in elementarer Form oder in Form einer Legierung umfasst. Aufgrund der chemischen Instabilität des ersten Elektrolyten kommt es zu Reaktionen, deren Produkte eine dünne, erste Schutzschicht 2 auf der Anode 1 formen.

Das Ausbilden der ersten Schutzschicht 2 kann beispielsweise durch Erwärmen beziehungsweise Temperieren der Anordnung, beispielsweise bei etwa 60 °C, im Rahmen eines Verfahrensschritts a1) unterstützt werden.

Auf die so gebildete erste Schutzschicht 2 wird in einem nachfolgenden Verfahrensschritt b) eine zweite Schutzschicht 3 zur Verstärkung und Stabilisierung aufgetragen. Hierzu wird ein polymerisierbares und/oder polymeres Material auf die erste Schutzschicht 2 aufgebracht. Diese zweite Schutzschicht 2 wird vorzugsweise sehr dünn aufgetragen, um die ionische Leitfähigkeit nicht zu beeinträchtigen. Es genügt bereits eine wenige Mikrometer dicke, zweite Schutzschicht, beispielsweise mit einer Schichtdicke in einem Bereich von ≥ 0,01 µm bis ≤ 100 µm, um die erste Schutzschicht 2 ausreichend zu stabilisieren. Die zweite Schutzschicht 3 wird vorzugsweise dadurch erzeugt, dass eine Zusammensetzung aus einer Monomerart oder einer Mischung verschiedener Monomerarten, welche gegebenenfalls eines oder mehrere Additive und/oder Lösungsmittel umfasst, auf die erste Schutzschicht 2 gegeben wird.

Die aufgebrachte Zusammensetzung kann anschließend polymerisieren und sich dabei fest mit der ersten Schutzschicht 2 verbinden und dabei einen festen Schutzschichtverbund 2,3 ausbilden. Dies ist bei konventionellen *in situ* ausgebildeten SEI-Schutzschichten nicht möglich.

Die Polymerisation kann abhängig von den verwendeten Monomeren radikalisch oder anionisch initiiert werden. So kann das Ausbilden der zweiten Schutzschicht 3, insbesondere die Polymerisation des polymerisierbaren Materials, beispielsweise durch Bestrahlen oder Erwärmen der Anordnung aus Verfahrenschritt b) im Rahmen eines Verfahrensschritts b1) unterstützt werden.

Durch die zweite Schutzschicht 3 wird vorteilhafterweise die erste Schutzschicht 2 stabilisiert, so dass das auf der Anode 1 gebildete Schutzschichtsystem 2,3 deutlich stabiler und langlebiger ist, als eine in der Zelle *in situ* gebildete SEI-Schutzschicht.

Anschließend kann die so hergestellte Anode in einem weiteren, nicht dargestellten Verfahrensschritt c) mit einer Kathode, einem zweiten Elektrolyten und gegebenenfalls einem oder mehreren, weiteren Zellbauteilen zu einer Lithiumzelleassembliert werden.

## Patentansprüche

1. Verfahren zur Herstellung einer Anode für eine Lithiumzelle und/oder einer Lithiumzelle, umfassend die Verfahrensschritte:
a) Aufbringen eines ersten Elektrolyten auf eine, metallisches Lithium umfassende Anode (1) zum Ausbilden einer ersten Schutzschicht (2) auf der Anode (1), wobei der erste Elektrolyt mindestens ein Lösungsmittel umfasst, welches ausgewählt ist aus der Gruppe bestehend aus Kohlensäureestern, Lactonen, Ethern und Kombinationen davon, wobei Verfahrensschritt a) vor dem Zusammenfügen der herzustellenden Lithiumzelle erfolgt, und
b) Aufbringen eines polymerisierbaren und/oder polymeren Materials auf die erste Schutzschicht (2) zum Ausbilden einer zweiten Schutzschicht (3) auf der ersten Schutzschicht (2).

2. Verfahren nach Anspruch 1, wobei das Verfahren weiterhin den Verfahrensschritt:
a1) Erwärmen der Anordnung aus Verfahrenschritt a) umfasst.

3. Verfahren nach Anspruch 1 oder 2, wobei das Verfahren weiterhin den Verfahrensschritt:
b1) Bestrahlen oder Erwärmen der Anordnung aus Verfahrenschritt b) umfasst.

4. Verfahren nach einem der Ansprüche 1 bis 3, wobei das Verfahren weiterhin den Verfahrensschritt:
c) Zusammenfügen der Anodenanordnung aus Verfahrensschritt a), a1), b) oder b1), mit einer Kathode, einem zweiten Elektrolyten und gegebenenfalls einem oder mehreren, weiteren Zellbauteilen zu einer Lithiumzelle,
umfasst.

5. Verfahren nach Anspruch 4, wobei der zweite Elektrolyt mindestens ein Lösungsmittel umfasst, welches ausgewählt ist aus der Gruppe bestehend aus Kohlensäureestern, Lactonen, Ethern und Kombinationen davon.

6. Verfahren nach einem der Ansprüche 1 bis 5, wobei der erste und/oder zweite Elektrolyt mindestens ein Lösungsmittel umfasst, welches ausgewählt ist aus der Gruppe bestehend aus Ethylencarbonat, Propylencarbonat, Dimethylcarbonat, Diethylcarbonat, Vinylencarbonat, y-Butyrolacton, 1,3-Dioxolan, Ethylenglycoldimethylether, Ethylenglycoldiethylether, Diethylenglykoldimethylether, Triethylenglykoldiemethylether und Kombinationen davon.

7. Verfahren nach einem der Ansprüche 1 bis 6, wobei der erste und/oder zweite Elektrolyt mindestens ein Leitsalz umfasst, welches ausgewählt ist aus der Gruppe bestehend aus Lithiumbis(trifluormethylsulphonyl)imid, Lithiumhexafluorophosphat, Lithiumtetrafluoroborat, Lithiumtrifluormethansulfonat, Lithiumchlorat, Lithiumbis(oxalato)borat, Lithiumfluorid, Lithiumnitrat, Lithiumhexafluoroarsenat und Kombinationen davon.

8. Verfahren nach einem der Ansprüche 4 bis 7, wobei der erste Elektrolyt ein oder mehrere Lösungsmittel und/oder Leitsalze aufweist, welche besser zum Ausbilden einer Schutzschicht aus Elektrolytzersetzungsprodukten auf dem Anodenmaterial geeignet sind als das oder die Lösungsmittel und/oder Leitsalze des zweiten Elektrolyten.

9. Verfahren nach einem der Ansprüche 4 bis 8, wobei
- der erste Elektrolyt einen Kohlensäureester oder eine Kohlensäureestermischung als Lösungsmittel aufweist, und
- der zweite Elektrolyt einen Ether oder eine Ethermischung als Lösungsmittel aufweist.

10. Verfahren nach einem der Ansprüche 4 bis 9, wobei
- der erste Elektrolyt einen cyclischen Kohlensäureester oder eine Mischung cyclischer Kohlensäureester als Lösungsmittel aufweist, und
- der zweite Elektrolyt einen cyclischen oder acyclischen Mono-, Di- oder Triether oder eine Mischung von cyclischen und/oder acyclischen Mono-, Di- und/oder Triethern als Lösungsmittel aufweist.

11. Verfahren nach einem der Ansprüche 1 bis 10, wobei der erste Elektrolyt und/oder das polymerisierbare und/oder polymere Materials mindestens ein Additiv umfasst, welches ausgewählt ist aus der Gruppe bestehend aus polymerisierbaren und/oder polymerisierten Verbindungen, Verbindungen mit delokalisierten Elektrodensystemen, halogenierten beziehungsweise perfluorierten Polymeren, Lithiumionen leitenden Verbindungen beziehungsweise Festkörperpartikeln und Kombinationen davon.

12. Verfahren nach einem der Ansprüche 1 bis 11, wobei der erste Elektrolyt und/oder das polymerisierbare und/oder polymere Materials mindestens ein Additiv umfasst, welches ausgewählt ist aus der Gruppe bestehend aus Acrylsäurederivaten; Vinylencarbonat; Catecholcarbonat, Polyvinylidenfluorid, Aluminiumtriiodid, Aluminiumtrifluorid; Lanthanzirkonaten und Kombinationen davon.

13. Verfahren nach einem der Ansprüche 1 bis 12, wobei das polymerisierbare und/oder polymere Material ein oder mehrere Monomere umfasst, welche ausgewählt sind aus der Gruppe bestehend aus Ethylenoxid, Ethylen, Propylen, Styrol, Vinylcarbonat, Acrylaten und Mischungen davon.

14. Anode für eine Lithiumzelle, hergestellt durch ein Verfahren nach einem der Ansprüche 1 bis 3 oder 5 bis 13.

15. Lithiumzellen, hergestellt durch ein Verfahren nach einem der Ansprüche 1 bis 13.

## Claims

1. Process for producing an anode for a lithium cell and/or a lithium cell, which comprises the process steps:
a) application of a first electrolyte to an anode (1) comprising metallic lithium in order to form a first protective layer (2) on the anode (1), where the first electrolyte comprises at least one solvent selected from the group consisting of carbonic esters, lactones, ethers and combinations thereof, and process step a) is carried out before assembly of the lithium cell to be produced, and
b) application of a polymerizable and/or polymeric material to the first protective layer (2) in order to form a second protective layer (3) on the first protective layer (2).

2. Process according to Claim 1, wherein the process further comprises the process step:
a1) heating of the arrangement from process a).

3. Process according to Claim 1 or 2, wherein the process further comprises the process step:
b1) irradiation or heating of the arrangement from process step b).

4. Process according to any of Claims 1 to 3, wherein the process further comprises the process step:
c) assembly of the anode arrangement from process step a), a1), b) or b1) with a cathode, a second electrolyte and optionally one or more, further cell components to give a lithium cell.

5. Process according to Claim 4, wherein the second electrolyte comprises at least one solvent selected from the group consisting of carbonic esters, lactones, ethers and combinations thereof.

6. Process according to any of Claims 1 to 5, wherein the first and/or second electrolyte comprises at least one solvent selected from the group consisting of ethylene carbonate, propylene carbonate, dimethyl carbonate, diethyl carbonate, vinylene carbonate, γ-butyrolactone, 1,3-dioxolane, ethylene glycol dimethyl ether, ethylene glycol diethyl ether, diethylene glycol dimethyl ether, triethylene glycol dimethyl ether and combinations thereof.

7. Process according to any of Claims 1 to 6, wherein the first and/or second electrolyte comprises at least one electrolyte salt selected from the group consisting of lithium bis(trifluoromethylsulphonyl)imide, lithium hexafluorophosphate, lithium tetrafluoroborate, lithium trifluoro-methanesulphonate, lithium chlorate, lithium bis(oxalato)borate, lithium fluoride, lithium nitrate, lithium hexafluoroarsenate and combinations thereof.

8. Process according to any of Claims 4 to 7, wherein the first electrolyte comprises one or more solvents and/or electrolyte salts which are better suited to forming a protective layer composed of electrolyte decomposition products on the anode material than the solvent(s) and/or electrolyte salts of the second electrolyte.

9. Process according to any of Claims 4 to 8, wherein
- the first electrolyte comprises a carbonic ester or a carbonic ester mixture as solvent and
- the second electrolyte comprises an ether or an ether mixture as solvent.

10. Process according to any of Claims 4 to 9 wherein
- the first electrolyte comprises a cyclic carbonic ester or a mixture of cyclic carbonic esters as solvent and
- the second electrolyte comprises a cyclic or acyclic monoether, diether or triether or a mixture of cyclic and/or acyclic monoethers, diethers and/or triethers as solvent.

11. Process according to any of Claims 1 to 10, wherein the first electrolyte and/or the polymerizable and/or polymeric material comprises at least one additive selected from the group consisting of polymerizable and/or polymerized compounds, compounds having delocalized electron systems, halogenated or perfluorinated polymers, compounds or solid particles which conduct lithium ions and combinations thereof.

12. Process according to any of Claims 1 to 11, wherein the first electrolyte and/or the polymerizable and/or polymeric material comprises at least one additive selected from the group consisting of acrylic acid derivatives; vinylene carbonate; catechol carbonate, polyvinylidene fluoride, aluminium triiodide, aluminium trifluoride; lanthanum zirconates and combinations thereof.

13. Process according to any of Claims 1 to 12, wherein the polymerizable and/or polymeric material comprises one or more monomers selected from the group consisting of ethylene oxide, ethylene, propylene, styrene, vinyl carbonate, acrylates and mixtures thereof.

14. Anode for a lithium cell, produced by a process according to any of Claims 1 to 3 or 5 to 13.

15. Lithium cell produced by a process according to any of Claims 1 to 13.

## Revendications

1. Procédé de fabrication d'une anode pour une pile au lithium et/ou d'une pile au lithium, comprenant les étapes de procédé consistant à
a) appliquer un premier électrolyte sur une anode (1) comprenant du lithium métallique pour former une première couche de protection (2) sur l'anode (1), le premier électrolyte comprenant au moins un solvant qui est choisi dans le groupe constitué par les esters de l'acide carbonique, les lactones, les éthers et leurs combinaisons, l'étape de procédé a) ayant lieu avant l'assemblage de la pile au lithium à produire, et
b) appliquer un matériau polymérisable et/ou polymère sur la première couche de protection (2) pour former une deuxième couche de protection (3) sur la première couche de protection (2).

2. Procédé selon la revendication 1, le procédé comprenant en outre l'étape de procédé consistant à a1) chauffer la disposition de l'étape de procédé a).

3. Procédé selon la revendication 1 ou 2, le procédé comprenant en outre l'étape de procédé consistant à
b1) irradier ou chauffer la disposition de l'étape de procédé b).

4. Procédé selon l'une quelconque des revendications 1 à 3, le procédé comprenant en outre l'étape de procédé consistant à
c) assembler la disposition d'anode de l'étape de procédé a), a1), b) ou b1) avec une cathode, un deuxième électrolyte et le cas échéant un ou plusieurs autres modules de pile en une pile au lithium.

5. Procédé selon la revendication 4, le deuxième électrolyte comprenant au moins un solvant qui est choisi dans le groupe constitué par les esters de l'acide carbonique, les lactones, les éthers et leurs combinaisons.

6. Procédé selon l'une quelconque des revendications 1 à 5, le premier et/ou deuxième électrolyte comprenant au moins un solvant qui est choisi dans le groupe constitué par le carbonate d'éthylène, le carbonate de propylène, le carbonate de diméthyle, le carbonate de diéthyle, le carbonate de vinyle, la γ-butyrolactone, le 1,3-dioxolane, l'éthylèneglycoldiméthyléther, l'éthylèneglycoldiéthyléther, le diéthylèneglycoldiméthyléther, le triéthylèneglycoldiméthyléther et leurs combinaisons.

7. Procédé selon l'une quelconque des revendications 1 à 6, le premier et/ou deuxième électrolyte comprenant au moins un sel conducteur qui est choisi dans le groupe constitué par le lithium-bis(trifluorométhylsulfonyl)imide, l'hexafluorophosphate de lithium, le tétrafluoroborate de lithium, le trifluorométhanesulfonate de lithium, le chlorate de lithium, le bis(oxalato)borate de lithium, le fluorure de lithium, le nitrate de lithium, l'hexafluoroarsénate de lithium et leurs combinaisons.

8. Procédé selon l'une quelconque des revendications 4 à 7, le premier électrolyte présentant un ou plusieurs solvants et/ou sels conducteurs, qui conviennent mieux pour la formation d'une couche de protection en produits de décomposition de l'électrolyte sur le matériau de l'anode que le ou les solvants et/ou sels conducteurs du deuxième électrolyte.

9. Procédé selon l'une quelconque des revendications 4 à 8,
- le premier électrolyte présentant un ester d'acide carbonique ou un mélange d'esters d'acide carbonique comme solvant et
- le deuxième électrolyte présentant un éther ou un mélange d'éthers comme solvant.

10. Procédé selon l'une quelconque des revendications 4 à 9,
- le premier électrolyte présentant un ester d'acide carbonique cyclique ou un mélange d'esters d'acide carbonique cycliques comme solvant et
- le deuxième électrolyte présentant un monoéther, un diéther ou un triéther cyclique ou acyclique ou un mélange de monoéthers, de diéthers et/ou de triéthers cycliques ou acycliques comme solvant.

11. Procédé selon l'une quelconque des revendications 1 à 10, le premier électrolyte et/ou le matériau polymérisable et/ou polymère comprenant au moins un additif qui est choisi dans le groupe constitué par les composés polymérisables et/ou polymérisés, les composés présentant des systèmes électroniques délocalisés, les polymères halogénés ou perfluorés, les composés ou particules solides conducteurs de lithium et leurs combinaisons.

12. Procédé selon l'une quelconque des revendications 1 à 11, le premier électrolyte et/ou le matériau polymérisable et/ou polymère comprenant au moins un additif qui est choisi dans le groupe constitué par les dérivés d'acide acrylique ; le carbonate de vinyle ; le carbonate de catéchol, le poly(fluorure de vinylidène) ; le triiodure d'aluminium, le trifluorure d' alurriinium, les zirconates de lanthane et leurs combinaisons.

13. Procédé selon l'une quelconque des revendications 1 à 12, le matériau polymérisable et/ou polymère comprenant un ou plusieurs monomères qui sont choisis dans le groupe constitué par l'oxyde d'éthylène, l'éthylène, le propylène, le styrène, le carbonate de vinyle, les acrylates et leurs mélanges.

14. Anode pour une pile au lithium, préparée selon un procédé selon l'une quelconque des revendications 1 à 3 ou 5 à 13.

15. Pile au lithium, préparée selon un procédé selon l'une quelconque des revendications 1 à 13.
